Europäisches Patentamt

European Patent Office

Office européen des brevets

(19)

(11) Publication number: **0 360 254**

**A2**

(12)

# EUROPEAN PATENT APPLICATION

(21) Application number: 89117415.3

(22) Date of filing: 20.09.89

(51) Int. Cl.⁵: **F16D 69/02 , C22C 37/00 , F16D 55/00**

(30) Priority: 20.09.88 JP 233777/88
20.09.88 JP 233778/88

(43) Date of publication of application:
**28.03.90 Bulletin 90/13**

(84) Designated Contracting States:
**DE GB**

(71) Applicant: NISSAN MOTOR CO., LTD.
No.2, Takara-cho, Kanagawa-ku
Yokohama-shi Kanagawa-ken 221(JP)

(72) Inventor: Mibe, Takahiro
1155-2, Isobe
Sagamihara-shi Kanagawa-ken(JP)
Inventor: Akiyama, Koichi
68, Oppamahigashi-cho 3-chome
Yokosuka-shi Kanagawa-ken(JP)
Inventor: Jinbo, Yoshio
308, Fudaba-cho
Hiratuka-shi Kanagawa-ken(JP)
Inventor: Ozawa, Akihiko
4688-1, Sobudai 3-chome
Zama-shi Kanagawa-ken(JP)
Inventor: Matsui, Hiromichi Narakita-danchi
2913 Nara-machi Midori-ku
Yokohama-shi Kanagawa-ken(JP)

(74) Representative: Patentanwälte Grünecker,
Kinkeldey, Stockmair & Partner
Maximilianstrasse 58
D-8000 München 22(DE)

(54) Friction device.

(57) A friction device suitable for use in an automotive brake system, for example, comprises first and second friction components. The first friction component is made of graphitic cast block which has a thermal conductivity $\lambda_R$ in a range of 0.090 to 0.140 cal/cm.sec.°C at the normal temperatujre range, at least at a friction surface. The second friction component is made of organic friction material which has a thermal conductivity $\lambda_P$ in a range of $0.65 \times 10^{-3}$ to $3.00 \times 10^{-3}$ cal/cm.sec.°C. Furthermore, the thermal conductivities $\lambda_R$ and $\lambda_P$ are so related as to satisfy the following relationship.

$$\lambda_R \geq -152 \times \lambda_P + 0.24$$

The friction device is successful improving heat check resistance ability which is substantially influenced by thermal conductivity of components.

EP 0 360 254 A2

*Fig. 1*

## FRICTION DEVICE

BACKGROUND OF THE INVENTION

Field of the Invention

The present invention relates to a friction device, such as an automotive brake device, particularly as a disc brake device. More specifically, the invention relates to composition of material for producing a component of the friction device.

Description of the Background Art

Typical friction device is an automotive brake device which is designed for converting moving energy into a heat energy for discharging energy as heat to atmosphere in order to absorb moving energy. In the automotive brake device, a disc rotor rotatable with a road wheel is employed as a movement, and a brake pad carried by a carriper cylinder body is employed as active component. The brake pad is brought into contact with the disc rotor for frictionally restricting rotation of the disc rotor and thus restricting rotation of the road wheel.

Conventionally, the disc rotor is formed of a material composition as shown in the following table I.

TABLE I

| JIS No | Chemical Composition | | | | | | Tensil Strength | Brinell Hardness |
|--------|------|-----|-----|------|-----|-----|---------|----------|
|        | C    | Si  | Mn  | P    | S   | Fe  |         |          |
| FC25   | 3.35 | 2.1 | 0.6 | 0.02 | 0.1 | Rem | 26.4    | 88.1     |

On the other hand, the brake pad is formed of a material composition as shown in the following table II.

TABLE II

| Composition | Asbestos | Semi-Metallics | Low Steel Non Steel |
|-------------|----------|----------------|---------------------|
| Asbestos Fiber | 20 - 50 | - | - |
| Steel Fiber | - | 40 - 70 | 0 - 20 |
| Replacement Fiber | - | - | 3 - 30 |
| Organic Matrix | 10 - 20 | 5 - 20 | 5 - 20 |
| Lubricant | 0 - 20 | 5 - 20 | 0 - 15 |
| Metal | 10 - 30 | 5 - 20 | 10 - 30 |
| Others | 5 - 20 | 10 - 20 | 5 - 40 |

In the recent years, because to advancement of the automotive technologies for providing higher performance in various aspect, such as an internal combustion engine as prime mover, a power train, suspension systems, body structures and so forth, as well as extension of highway networks, occurrences

2

of high speed braking is substantially increased. By repeatedly applying high speed braking, large amount of moving energy is converted into heat energy for heating the components of the brake device, as the friction device. Because the heat energy in repeated high speed braking is substantial, possibility of causing heat checks is increased.

It may be possible to use material having high thermal conductivity for forming the brake pad. Such high thermal conductivity brake pas may reduce occurrence of heat checks. On the other hand, due to high thermal conductivity, larger amount of heat is transferred to the carriper cylinder body and subsequently to a hydraulic brake circuit for increasing possibility of causing vapor lock.

## SUMMARY OF THE INVENTION

Therefore, it is an object of the present invention to provide a friction device which can eliminate possibility of causing heat checks and can avoid influence of heat generated to the associated actuation system which operates the friction device.

In order to accomplish aforementioned and other objects, a friction device, according to the present invention, comprises first and second friction components. The first friction component is made of graphitic cast block which has a thermal conductivity $\lambda_R$ in a range of 0.090 to 0.140 cal/cm.sec.°C at the normal temperature range, at least at a friction surface. The second friction component is made of organic friction material which has a thermal conductivity $\lambda_P$ in a range of $0.65 \times 10^{-3}$ to $3.00 \times 10^{-3}$ cal/cm.sec.°C. Furthermore, the thermal conductivities $\lambda_R$ and $\lambda_P$ are so related as to satisfy the following relationship.

$$\lambda_R \geq -152 \times \lambda_P + 0.24$$

It is found that, in the friction device, such as an automotive brake device, heat check resistance ability is substantially influenced by thermal conductivity of components. It is further found that there is an optimal relationship of thermal conductivities between movement, such as disc rotor, and active component, such as brake pad.

Namely, as is well known and as discussed above, higher thermal conductivity material may have lesser possibility of causing heat checks. On the other hand, higher thermal conductivity material may have lower strength. In order to obtaining satisfactory heat check resistance in the movement made of graphitic cast block, thermal conductivity $\lambda_R$ higher than or equal to 0.090 cal/cm.sec.°C, at a normal environmental temperature range, is necessary. In view of the strength, the thermal conductivity $\lambda_R$ is to be limited lower than or equal to 0.140 cal/cm.sec.°C, at the normal environmental temperature range. If the thermal conductivity $\lambda_R$ is higher than 0.140 cal/cm.sec.°C, strength can be lowered into unacceptable level and as a result lower heat check résistance. Therefore, as the movement of the friction device, the material is to be provided thermal conductivity in a range of 0.090 cal/cm.sec.°C to 0.140 cal/cm.sec.°C.

On the other hand, in view of avoidance of influence of heat for the actuation system, such as hydraulic actuation system, it is preferred to provide low thermal conductivity for the active component made of organic composition in order to transfer lesser heat to the actuation system. On the other hand, as set forth, since the principle of the friction device is to convert the moving energy into the heat energy for exposing the converted heat energy to the atmosphere for absorbing the moving energy, the minimum thermal conductivity $\lambda_P$ required for effectively absorbing the moving energy is $0.65 \times 10^{-3}$ cal/cm.sec.°C. Namely, because the material of the active component is composed of fiber as reinforcement and solid lubricant as lubricating agent, when the thermal conductivity $\lambda_P$ is lower than $0.65 \times 10^{-3}$ cal/cm.sec.°C will make the active component inoperative for performing frictional effect. On the other hand, in order to successfully avoid influence of the head, the maximum thermal conductivity $\lambda_P$ is to be limited to be lower than or equal to $3.00 \times 10^{-3}$ cal/cm.sec.°C.

It is further found that the thermal conductivity $\lambda_P$ of the active component will influence to the heat check resistance ability of the movement. Namely, despite of the required thermal conductivity range of individual component as set forth above, another limitation would becomes necessary in view of combination of the movement and the active component. For instance, when the thermal conductivity in the movement is in the relatively low value within the aforementioned range, optimal heat check resistance can be obtained when the thermal conductivity of the active component is within a further limited range. Through experiments, it is therefore found that the relationship between thermal conductivities $\lambda_R$ and $\lambda_P$ has to satisfy the foregoing formula. By providing thermal conductivities satisfying the foregoing formula, the thermal conductivity of the active material will compensate lower conductivity of the movement.

On the other hand, as a material for forming the movement, such as disc rotor of the automotive brake device, a graphitic cast iron having composition of:
C : 3.5 Wt% to 4.0 Wt%

Si: 1.6 Wt% to 2.0 Wt%

Mn: 0.5 Wt% to 0.8 Wt%

Mo: 0.4 Wt% to 1.2 Wt%

Fe: remainder and inevitable impurity

The matrix structure of the aforementioned composition is in a form of pearlite.

The composition may also contain Ti in a content of 0.05 Wt% to 0.10 Wt%.

In general, the heat check resistance is determined by high temperature strength, Young's modulus, thermal conductivity and thermal expansion coefficient and so forth. Namely, the heat check resistance can be determined by thermal stress caused due to variation of volume under the condition where thermal strain caused by material strength at thermal load and thermal load is restrained. Through experiments, it was found that the most important factor to influence for head check resistance is thermal conductivity. In other words, mere increasing of material strength was not effective for heat check resistance. To this, as set forth above, the higher thermal conductivity will substantially reduces possibility of causing head checks. However, on the other hand, increasing of the thermal conductivity may reduces strength of the material. In order to compensate the lowered strength, a reinforcement material has to be added. The reinforcement material to be added must have satisfactorily reinforcement capacity at a temperature range, in which heat checks may be occurred.

In view of the about, the composition of the graphitic cast iron is determined as set forth above. Namely, C is a material for improving thermal conductivity. In order to obtain the desired thermal conductivity, the content of C has to be greater than or equal to 3.5 Wt%. On the other hand, if the amount of C is in excess of 4.0 Wt%, it may exceed eutectic crystallization point for causing precipitation of large grain size graphite and whereby causing lowering of strength. Therefore, the range of content of C is limited within the range of 3.5 Wt% to 4.0 Wt%. Si forms solid solution in the matrix to caused lowering of thermal conductivity. Therefore, the maximum content is 2.0 Wt%. On the other hand, in order to obtain fine and desired grain sized of graphite percipitation and whereby to obtain satisfactorily high wear resistance, it is required 1.6 Wt% or more of Si. Therefore, the range of content of Si is set in a range of 1.6 Wt% to 2.0 Wt%.

Mn is a material for providing sufficient strength of the material for use as a material for the movement of the friction device, such as disc rotor. In order to obtain sufficient strength, 0.5 Wt% or more of Mn is to be added to the matrix. On the other hand, if more than 0.8 Wt% of Mn is added, MnS which is affect for toughness, can be precipitated in the matrix. Therefore, the preferred range of content is within a range of 0.5 Wt% to 0.8 Wt%. Mo is an essential additive for reinforcing strength for providing satisfactory heat check resistance. In order to effective reinforcement of strength, minimum content of Mo is 0.4 Wt%. On the other hand, if more than 1.2 Wt% of Mo is added, carbides or casting defects can be created. Therefore, the preferred content range of Mo is 0.4 Wt% to 1.2 Wt%.

It was also found that by adding Ti, wear resistance can be enhanced. In order to obtain enhancement of wear resistance, 0.05 Wt% or more of Ti is to be added. On the other hand, if more than 0.10 Wt% of Ti is added, grain size of graphite becomes too small to hold satisfactory level of wear resistance. Therefore, the preferred range of Ti is 0.05 Wt% to 0.10 Wt%.

According to one aspect of the invention, a friction device comprises:

a first component having a first friction surface, which is made of a graphitic cast iron and has thermal conductivity $\lambda_R$ in a range of 0.090 cal/cm.sec.°C to 0.140 cal/cm.sec.°C at a normal temperature;

a second component having a second friction surface movable toward and away from the first friction surface of the first component, the second component establishing frictional engagement of the second friction surface with the first friction surface of the first component when it is shifted toward the first component, the second component is made of a material having thermal conductivity $\lambda_P$ in a range of 0.65 $\times$ $10^{-3}$ cal/cm.sec.°C to 3.00 x $10^{-3}$ cal/cm.sec.°C at a normal temperature, and the thermal conductivity $\lambda_P$ being set for satisfying the formula:

$$\lambda_R \geq -152 \times \lambda_P + 0.24.$$

The graphitic cast iron is composed of:

C : 3.5 Wt% to 4.0 Wt%

Si: 1.6 Wt% to 2.0 Wt%

Mn: 0.5 Wt% to 0.8 Wt%

Mo: 0.4 Wt% to 1.2 Wt%

Fe: remainder and inevitable impurity.

The graphitic cast iron further contains 0.05 Wt% to 0.10 Wt% of Ti.

The second component is made of an organic friction material containing at least one of asbestos, steel fiber and aromatic polyimide.

According to another aspect of the invention, an automotive brake assembly comprises:

a disc rotor having a first friction surface, which is made of a graphitic cast iron and has thermal conductivity $\lambda_R$ in a range of 0.090 cal/cm.sec.°C to 0.140 cal/cm.sec.°C at a normal temperature;

a brake pad having a second friction surface movable toward and away from the first friction surface of the disc rotor, the brake pad establishing frictional engagement of the second friction surface with the first friction surface of the disc rotor when it is shifted toward the disc rotor, the brake pad is made of a material having thermal conductivity $\lambda_P$ in a range of $0.65 \times 10^{-3}$ cal/cm.sec.°C to $3.00 \times 10^{-3}$ cal/cm.sec.°C at a normal temperature, and the thermal conductivity $\lambda_P$ being set for satisfying the formula:

According to a further aspect of the invention, a disc rotor for an automotive brake assembly is made of a graphitic cast iron composed of:

C : 3.5 Wt% to 4.0 Wt%

Si: 1.6 Wt% to 2.0 Wt%

Mn: 0.5 Wt to 0.8 Wt%

Mo: 0.4 Wt% to 1.2 Wt%

Fe: remainder and inevitable impurity

## BRIEF DESCRIPTION OF THE DRAWINGS

The present invention will be understood more fully from the detailed description given herebelow and from the examples given herebelow and will be discussed with reference to the accompanying drawings.

In the drawings:

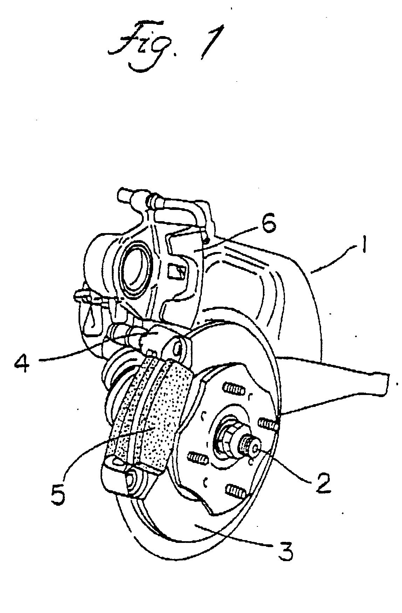

Fig. 1 is a perspective illustration of an automotive brake device as one example of application of a friction device according to the present invention;

Fig. 2 is a section of a disc rotor employed in the brake device of Fig. 1;

Fig. 3 is a chart showing relationship between conductivities $\lambda_R$ and $\lambda_P$ of the disc rotor and a brake pad in the brake device of Fig. 1;

Figs. 4 through 9 are microphotographies of examples No. 1, No. 2 and No. 3 and comparative examples No. 4, No. 5 and No. 6.

## DETAILED DESCRIPTION OF THE INVENTION

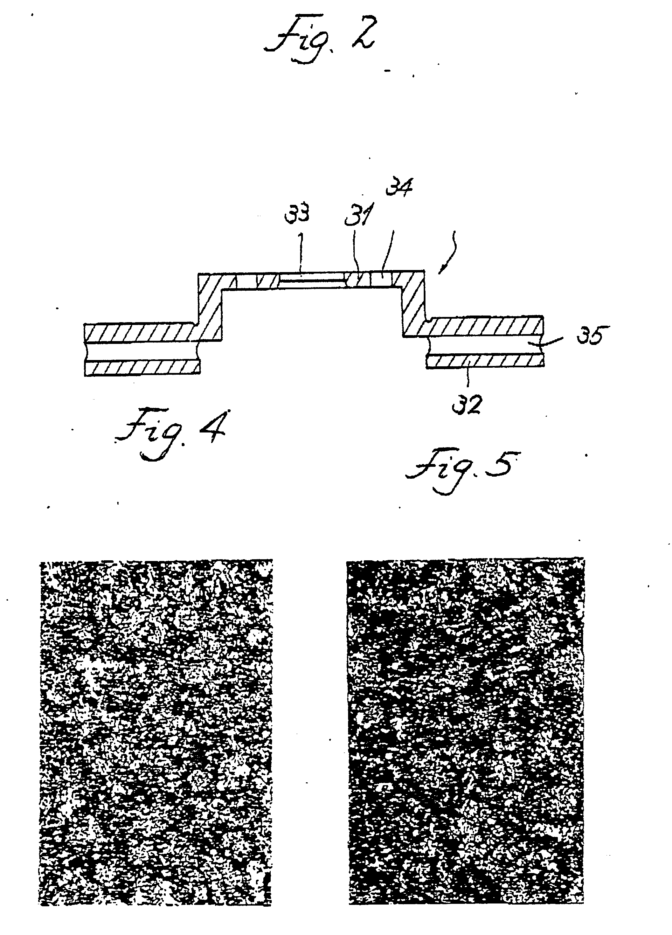

The friction device according to the present invention will be discussed in greater detail with respect to an application for an automotive brake device. In the automotive brake assembly 1, a disc rotor 3 is designed to be rigidly secured to a wheel axle 2 for rotation therewith. This disc rotor 3 may form a movement of the friction device according to the invention. A brake pad 5 is carried by a carriper cylinder body and actuated by a hydraulic piston in the carriper cylinder. The brake pad forms the active component of the friction device of the invention. As is well known, the brake pad 5 is depressed onto the friction surface of the disc rotor with a lining for establishing frictional engagement for converting rotational energy of the road wheel into heat energy for radiating into the atmosphere and whereby absorbing moving energy of the vehicle to decelerate. An reacting force on the brake pad 5 is absorbed by a torque member 4. As shown in Fig. 2, the disc rotor 3 has a center boss section 31 to engage with a wheel hub and an annular disc section 32. The boss section 31 is formed with a center opening 33 to receive a spindle of the wheel hub and bolt holes 34 for receiving wheel mounting bolts. On the other hand, the disc section is formed with cooling slot 35 for permitting air flow therethrough for cooling.

Such construction of disc-type automotive brake assembly is well known and would be unnecessary for discussing in further detail.

In order to demonstrate heat check resistance of the friction device of the invention, examples No. 1 through 6 as the disc rotor of graphitic cast iron were prepared. Chemical compositions and thermal conductivities of respective examples are shown in the following table III.

TABLE III

| EXAM. No. | CHEMICAL COMPOSITION (Wt%) | | | | | | | | | $\lambda_R$ |
|---|---|---|---|---|---|---|---|---|---|---|
| | C | Si | Mn | Cu | Cr | Ni | Ti | Mo | Fe | |
| 1 | 3.66 | 1.91 | 0.68 | - | - | - | 0.01 | 0.42 | Rem | 0.115 |
| 2 | 3.68 | 1.80 | 0.67 | - | - | - | 0.01 | 1.20 | Rem | 0.090 |
| 3 | 3.65 | 1.72 | 0.62 | - | - | - | 0.08 | 0.62 | Rem | 0.097 |
| 4 | 3.37 | 2.33 | 0.62 | 0.14 | 0.04 | - | 0.02 | - | Rem | 0.087 |
| 5 | 3.19 | 1.83 | 0.75 | - | 0.71 | 2.49 | 1.01 | - | Rem | 0.070 |
| * Example No.4 is JIS FC25 | | | | | | | | | | |
| * $\lambda_R$ : cal/cm.sec.°C | | | | | | | | | | |

Corresponding to the aforementioned examples No. 1 through No. 5, examples No. 1 through No. 5 of the brake pads of organic friction material were prepared. Types and thermal conductivity at normal temperature are shown in the following table IV.

TABLE IV

| EXAM. No. | TYPE | $\lambda P$ |
|---|---|---|
| 1 | Low Steel | 0.65 |
| 2 | Asbestos | 0.82 |
| 3 | Asbestos | 0.98 |
| 4 | Low Steel | 3.00 |
| 5 | Low Steel | 3.20 |

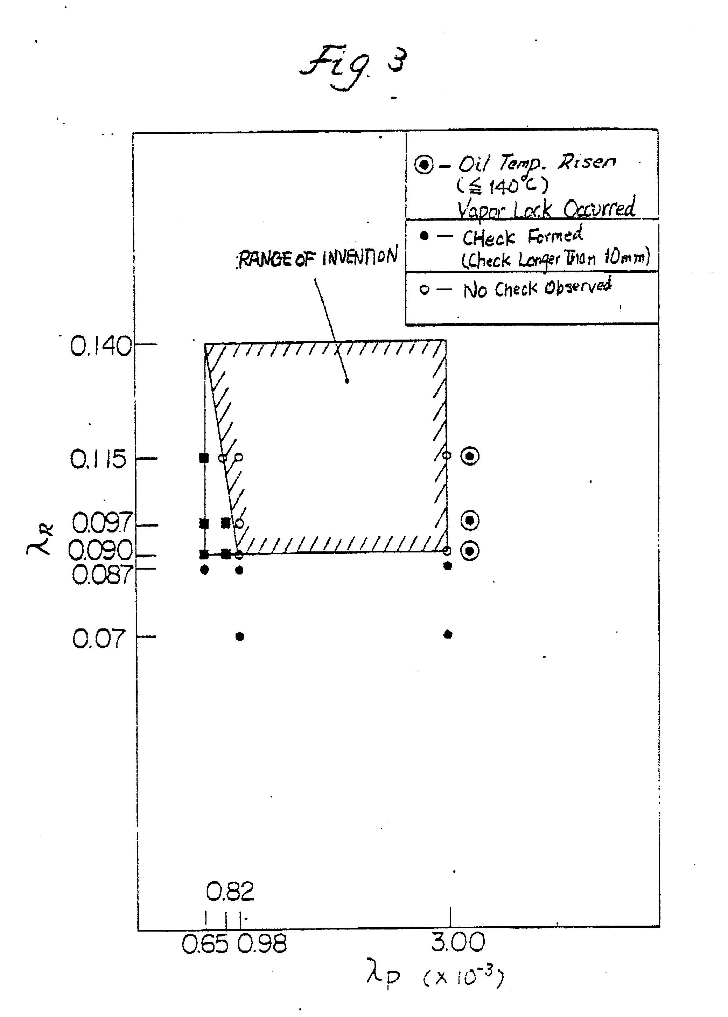

Each pair of the disc rotor and brake pad were installed to a brake dynamo test machine and test was performed. Braking test was performed at a rotation speed corresponding to the vehicular speed of 260 km/h for stopping within 30 sec. Braking test was repeated for hundred times. After brake test set forth above, check was performed utilizing dye for dying check or crack. The result is shown in Fig. 3.

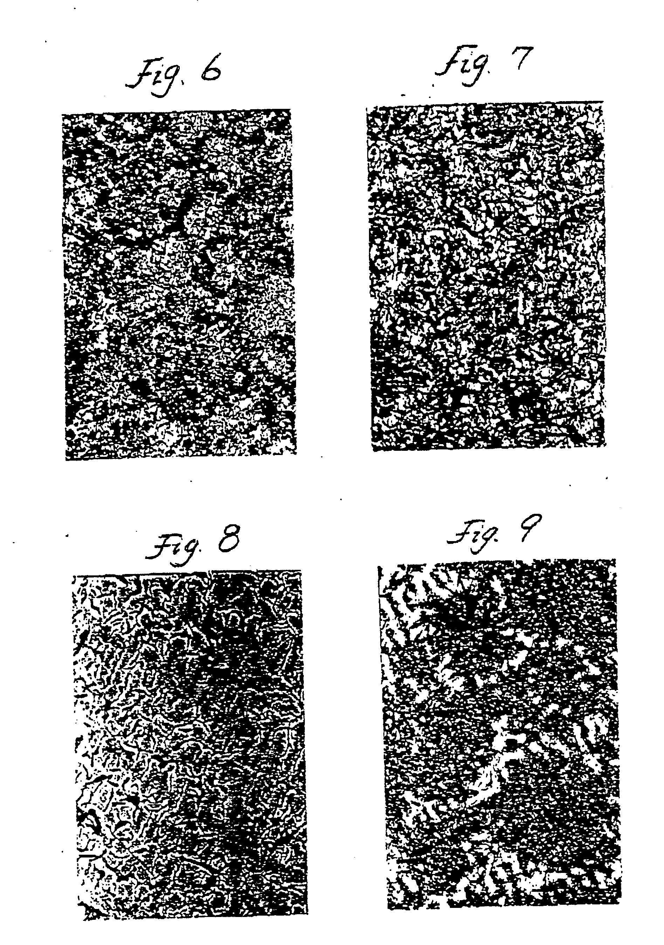

As can be seen from Fig. 4, heat check in the overall length of 10 mm was not observed in the examples satisfying the condition of the present invention, as shown by white circle. On the other hand, in the example including the disc rotor having thermal conductivity lower than 0.090 cal/cm.sec.°C, check or crack in a length greater than or equal to 10 mm was formed as shown by black circle. On the other hand, in the example having thermal conductivity higher than $3.00 \times 10^{-3}$ cal/cm.sec.°C, oil temperature in the hydraulic circuit was raised to lead vapor lock, as shown by double circle. Furthermore, when the thermal conductivity of the disc rotor is relatively low, check or crack longer than or equal to 10 mm was formed unless the thermal conductivity of the brake pad is sufficiently high, as shown by black square.

Therefore, by forming the disc rotor and brake pad satisfying the condition required in the invention as set forth above, satisfactorily high heat check resistance can be obtained for expanding life of the components of the brake device.

In order to select material composition for forming the disc rotor, experiments were also performed. In order to perform experiments, materials for examples No. 6, 7 and 8 and comparative examples 9, 10 and 11 are prepared according to the compositions as shown in the following table V.

6

TABLE V

| No. | CHEMICAL COMPOSITION | | | | | | | | | | FIG. |
|---|---|---|---|---|---|---|---|---|---|---|---|
| | C | Si | Mn | P | S | Mo | Cu | Cr | Ni | Ti | |
| EXAM. 6 | 3.66 | 1.91 | 0.68 | 0.12 | 0.05 | 0.42 | - | - | - | - | 4 |
| EXAM. 7 | 3.68 | 1.80 | 0.67 | 0.12 | 0.04 | 1.20 | - | - | - | - | 5 |
| EXAM. 8 | 3.65 | 1.72 | 0.62 | 0.11 | 0.04 | 0.62 | - | - | - | 0.08 | 6 |
| COMP. 9 | 3.37 | 2.33 | 0.62 | 0.11 | 0.13 | - | 0.14 | 0.04 | - | - | 7 |
| COMP. 10 | 2.58 | 1.61 | 0.61 | 0.10 | 0.03 | - | 5.85 | 2.38 | 12.1 | - | 8 |
| COMP. 11 | 3.19 | 1.83 | 0.75 | 0.10 | 0.05 | - | - | 0.71 | 2.49 | - | 9 |
| Comparative Example No. 9 : JIS FC25 | | | | | | | | | | | |
| Comparative Example No. 10 : Ni-resist | | | | | | | | | | | |

Utilizing the material listed in table V, the disc rotors for brake device as shown in Fig. 2 were formed. Structures of these example rotors were as shown in Figs. 4 through 9. Matrix structure of these examples were pearlite.

For these examples, the brake test as set forth above was performed. For the brake test, a brake pad of low steel type formed of a steel fiber and aromatic polyimide (Keppler: tradename) fiber. The result of the brake test is shown in the following table VI.

TABLE VI

| No. | (1) | (2) | (3) | (4) | (5) | (6) | (7) |
|---|---|---|---|---|---|---|---|
| Exam. 6 | 13.9 | 8.5 | Nil | 0.005 | 0.35 | 0.115 | $2.92 \times 10^{-2}$ |
| Exam. 7 | 22.6 | 13.9 | Nil | 0.004 | 0.35 | 0.090 | $2.60 \times 10^{-2}$ |
| Exam. 8 | 16.1 | 9.9 | Nil | 0.001 | 0.38 | 0.097 | $2.82 \times 10^{-2}$ |
| Comp. 9 | 26.4 | 11.6 | 91 | 0.05 | 0.35 | 0.087 | $1.56 \times 10^{-2}$ |
| Comp. 10 | 27.6 | 16.9 | 1015 | 0.06 | 0.30 | 0.047 | $0.51 \times 10^{-2}$ |
| Comp. 11 | 39.3 | 21.5 | 137 | 0.03 | 0.33 | 0.070 | $0.98 \times 10^{-2}$ |

(1) Strength under normal Temperature $(kgf/mm^2)$;
(2) Strength at 600 ° $(kgf/mm^2)$;
(3) Crack $\geq$ 10 mm on the rotor surface (mm);
(4) Wear on the rotor surface (mm)
(5) Average friction coefficient between rotor and brake pad;
(6) Thermal conductivity at normal temperature $(cal/cm.sec.°C)$,
(7) Vibration damping ability $(Q^{-1})$

As can be seen from the foregoing table VI, the examples Nos. 6, 7 and 8 exhibit much higher heat check resistance in comparison with that of the comparative example No. 9. On the other hand, the comparative examples Nos. 10 and 11, for which reinforcement additives are added for improving strength are lower heat check resistance even in comparison with the comparative example No. 9. In addition, the rotor discs of the invention also exhibit higher wear resistance than the comparative examples. Particularly, the example No. 8, for which Ti is added, shows substantially high wear resistance.

On the other hand, as observed from the foregoing table VI, the examples Nos. 6, 7 and 8 had friction coefficient equivalent ot hat of the comparative example No. 9 which corresponds to the conventionally known disc rotor formed of JIS FC25.

In addition, in order to check vibration damping performance, flat plate form test strips were obtained from respective disc rotors of examples Nos. 6, 7 and 8 and comparative examples Nos. 9, 10 and 11. Vibration damping performance of respective test strip was measured. The result is shown in the table VI. As can be seen from the result, the examples produced according to the invention has higher vibration damping performance than that of the comparative examples.

Therefore, the invention fulfills all of the objects and advantages sought therefor.

While the present invention has been disclosed in terms of the preferred embodiment in order to facilitate better understanding of the invention, it should be appreciated that the invention can be embodied in various ways without departing from the principle of the invention. Therefore, the invention should be understood to include all possible embodiments and modifications to the shown embodiments which can be embodied without departing from the principle of the invention set out in the appended claims.

## Claims

1. A friction device comprising:

a first component having a first friction surface, which is made of a graphitic cast iron and has thermal conductivity $\lambda_R$ in a range of 0.090 cal/cm.sec.°C to 0.140 cal/cm.sec.°C at a normal temperature;

a second component having a second friction surface movable toward and away from said first friction surface of said first component, said second component establishing frictional engagement of said second friction surface with said first friction surface of said first component when it is shifted toward said first component, said second component is made of a material having thermal conductivity $\lambda_P$ in a range of 0.65 x $10^{-3}$ cal/cm.sec.°C to 3.00 x $10^{-3}$ cal/cm.sec.°C at a normal temperature, and the thermal conductivity $\lambda_P$ being set for satisfying the formula:

$\lambda_R \geq -152 \times \lambda_\ell + 0.24$.

2. A friction device as set forth in claim 1, wherein said graphitic cast iron is composed of:

C : 3.5 Wt% to 4.0 Wt%

Si: 1.6 Wt% to 2.0 Wt%

Mn: 0.5 Wt% to 0.8 Wt%

Mo: 0.4 Wt% to 1.2 Wt%

Fe: remainder and inevitable impurity

3. A friction device as set forth in claim 2, wherein said graphitic cast iron further contains 0.05 Wt% to 0.10 Wt% of Ti.

4. A friction device as set forth in claim 1, wherein said second component is made of an organic friction material containing at least one of asbestos, steel fiber and aromatic polyimide.

5. An automotive brake assembly comprising:

a disc rotor having a first friction surface, which is made of a graphitic cast iron and has thermal conductivity $\lambda_R$ in a range of 0.090 cal/cm.sec.°C to 0.140 cal/cm.sec.°C at a normal temperature;

a brake pad having a second friction surface movable toward and away from said first friction surface of said disc rotor, said brake pad establishing frictional engagement of said second friction surface with said first friction surface of said disc rotor when it is shifted toward said disc rotor, said brake pad is made of a material having thermal conductivity $\lambda_P$ in a range of 0.65 x $10^{-3}$ cal/cm.sec.°C to 3.00 x $10^{-3}$ cal/cm.sec.°C at a normal temperature, and the thermal conductivity $\lambda_P$ being set for satisfying the formula:

$\lambda_R \geq -152 \times \lambda_P + 0.24$.

6. An automotive brake assembly as set forth in claim 5, wherein said graphitic cast iron is composed of:

C : 3.5 Wt% to 4.0 Wt%

Si: 1.6 Wt% to 2.0 Wt%

Mn: 0.5 Wt% to 0.8 Wt%

Mo: 0.4 Wt% to 1.2 Wt%

Fe: remainder and inevitable impurity

7. An automotive brake assembly as set forth in claim 6, wherein said graphitic cast iron further contains 0.05 Wt% to 0.10 Wt% of Ti.

8. An automotive brake assembly as set forth in claim 7, wherein said brake pad is made of an organic friction material containing at least one of asbestos, steel fiber and aromatic polyimide.

9. A disc rotor for an automotive brake assembly, which is made of a graphitic cast iron composed of:

C : 3.5 Wt% to 4.0 Wt%

Si: 1.6 Wt% to 2.0 Wt%

Mn: 0.5 Wt% to 0.8 Wt%

Mo: 0.4 Wt% to 1.2 Wt%

Fe: remainder and inevitable impurity

10. A disc rotor as set forth in claim 9, wherein said graphitic cast iron further contains 0.05 Wt% to 0.10 Wt% of Ti.

11. A disc rotor as set forth in claim 10, wherein said graphitic cast iron has thermal conductivity in a range of 0.090 cal/cm.sec.°C to 0.140 cal/cm.sec.°C.

*Fig. 1*

*Fig. 2*

*Fig. 4*

*Fig. 5*

# Fig. 3

Fig. 6

Fig. 7

Fig. 8

Fig. 9